# EUROPEAN PATENT SPECIFICATION

(11) **EP 2 884 800 B1**
(45) Date of publication and mention of the grant of the patent: **06.09.2017**
(21) Application number: 13863701.2
(22) Date of filing: 29.06.2013
(51) Int. Cl.: H04W 36/30

(54) **SIGNAL MEASUREMENT METHOD AND DEVICE**
SIGNALMESSVERFAHREN UND -VORRICHTUNG
PROCÉDÉ ET DISPOSITIF DE MESURE DE SIGNAL

(43) Date of publication of application: 17.06.2015
(73) Proprietor: Huawei Technologies Co., Ltd., Longgang District Shenzhen, Guangdong 518129 (CN)
(72) Inventor: YAO, Pei, Shenzhen Guangdong 518129 (CN); ZHANG, Yanqiang, Shenzhen Guangdong 518129 (CN); HUAN, Haibin, Shenzhen Guangdong 518129 (CN)
(74) Representative: Gill Jennings & Every LLP
(86) International application number: PCT/CN2013/078519
(87) International publication number: WO 2014/205852

(56) References cited:
- EP-A1- 1 881 721
- WO-A1-2005/032185
- CN-A- 1 268 277
- CN-A- 101 111 076
- CN-A- 102 342 149
- US-A1- 2012 163 185
- US-B1- 7 280 828
- ETRI: "Coordinated multi-cell transmission for LTE-Advanced downlink", 3GPP DRAFT; R1-082896 MULTI-CELL MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316374, [retrieved on 2008-08-12]

## Description

### TECHNICAL FIELD

Embodiments of the present invention relate to communications technologies, and in particular, to a signal measurement method and apparatus.

### BACKGROUND

With development of frequency reconfiguration technologies of a Global System for Mobile Communications (Global System for Mobile communication, GSM for short) network, frequency bands of the GSM system become increasingly narrow. To reduce interference on the GSM system and improve network quality, it is necessary to combine existing GSM sectors, that is, to combine main BCCH carriers of multiple existing GSM sectors into one main BCCH carrier, while traffic carriers are combined or not combined, so as to form a super cell.

In an existing GSM network, a terminal device performs downlink measurement for its serving cell and a neighboring cell of the serving cell; after obtaining receive levels of the serving cell and the neighboring cell, the terminal devices reports measurement results of both the serving cell and the neighboring cell to a base station controller by using a measurement report; the base station controller can perform mobility management on the terminal device according to the measurement results. However, in a scenario of a super cell, because the terminal device cannot normally measure level quality of sectors in the super cell, the terminal device cannot report the level quality of the sectors to the base station controller; consequently, the base station controller cannot perform mobility management on the terminal device or assign a sector to the terminal device.

US7280828B1 relates to a method for selectively granting GSM service based on signal strength. The method includes: receiving a first communication transmitted by the mobile station on a common control channel (CCCH) and comparing a signal strength associated with the first communication with a first signal strength threshold; if the signal strength associated with the first communication is greater than or equal to the first signal strength threshold, the method proceeds to receiving a second communication identifying a service request type, determining a second signal strength threshold corresponding to the service request type and granting the service request type if a signal strength associated with the second communication is greater than or equal to the second signal strength threshold.

WO2005032185A1 relates to a method for controlling the periodic reporting of measurements in a communication system from an access point to a controlunit over a control interface. The measurements are used by algorithms in the controlunit for controlling resource allocation at the access point. The reporting of measurements are controlled by dynamically determining a frequency for periodical reporting of each periodic measurement report from the access point to the control unit based on information on a number of links currently handled by the access point and such that a total aggregate frequency of periodical reporting of the number of periodic measurement reports does not exceed the limited total capacity of the control interface.

### SUMMARY

Embodiments of the present invention provide a signal measurement method and apparatus, which solve the following problems: in a scenario of a super cell, mobility management cannot be performed on a terminal device and a sector cannot be assigned to the terminal device.

According to a first aspect, an embodiment of the present invention provides a signal measurement method, including:
sending, by a base station controller, a message to instruct a base station to measure an uplink signal of a terminal device in a to-be-measured sector in a target super cell, where the terminal device receives or sends a signal on a relay layer channel of the target super cell, so that the base station measures, according to the message, the uplink signal on a physical channel corresponding to the relay layer channel in the to-be-measured sector, obtains an uplink measurement result of the to-be-measured sector, and reports the uplink measurement result to the base station controller; and
acquiring, by the base station controller, the uplink measurement result of the to-be-measured sector, where
the target super cell includes at least two sectors, the at least two sectors include at least one relay layer channel, and the relay layer channel includes a standalone dedicated control channel SDCCH with a same time-frequency resource or a physical random access channel PRACH with a same time-frequency resource.

In a first possible implementation manner of the first aspect, after the acquiring, by the base station controller, the uplink measurement result of the to-be-measured sector, the method further includes:
determining a target sector for the terminal device according to the uplink measurement result of the to-be-measured sector.

According to the first possible implementation manner of the first aspect, in a second possible implementation manner, after the determining a target sector for the terminal device, the method further includes:
handing over the terminal device to the target sector.

According to the first aspect or either the first or second possible implementation manners of the first aspect, in a third possible implementation manner, before the sending, by a base station controller, a message to instruct a base station to measure an uplink signal of a terminal device in a to-be-measured sector in a target super cell, the method further includes:
acquiring downlink signal measurement results of super cells reported by the terminal device;
determining the target super cell among the super cells according to the downlink signal measurement results of the super cells; and
handing over the terminal device to the relay layer channel.

According to the first aspect or any one of the first to third possible implementation manners of the first aspect, in a fourth possible implementation manner, the target super cell is a neighboring super cell of a serving super cell in which the terminal device is located;
or,
the target super cell is a serving super cell in which the terminal device is located.

According to the first possible implementation manner of the first aspect, in a fifth possible implementation manner, after the determining a target sector for the terminal device, the method further includes:
allocating a channel to the terminal device in the target sector, and assigning the channel to the terminal device.

According to the fifth possible implementation manner of the first aspect, in a sixth possible implementation manner, the relay layer channel the SDCCH, and the target super cell is a serving super cell in which the terminal device is located; and
before the sending, by a base station controller, a message to instruct a base station to measure an uplink signal of a terminal device in a to-be-measured sector in a target super cell, the method further includes:
receiving an access request message sent by the terminal device; and
sending an immediate assignment message to the terminal device according to the access request message, and assigning the terminal device to the SDCCH, so that the terminal device receives or sends a signal on the SDCCH.

According to the fifth possible implementation manner of the first aspect, in a seventh possible implementation manner, the relay layer channel includes the PRACH, and the target super cell is a super cell on which the terminal device camps;
and
before the sending, by a base station controller, a message to instruct a base station to measure an uplink signal of a terminal device in a to-be-measured sector in a target super cell, the method further includes:
receiving an access request message sent by the terminal device on the PRACH.

According to the first aspect or any one of the first to the seventh possible implementation manners of the first aspect, in an eighth possible implementation manner, the determining a target sector for the terminal device according to the measurement result includes:
determining, among sectors in which uplink measurement is performed for the relay layer channel used by the terminal device, a sector with a top priority as the target sector according to the uplink measurement result.

According to the first aspect or any one of the first to eighth possible implementation manners of the first aspect, in a ninth possible implementation manner, the message includes: identifier information of time-frequency resources corresponding to the relay layer channel and/or identifier information of the terminal device; or
identifier information of time-frequency resources corresponding to the relay layer channel and/or identifier information of the terminal device, and identifier information of the to-be-measured sector.

According to a second aspect, an embodiment of the present invention provides a signal measurement method, including:
receiving, by a base station, a message sent by a base station controller;
measuring, by the base station according to the message, an uplink signal on a physical channel corresponding to a relay layer channel of a target super cell in a to-be-measured sector; and
reporting, by the base station, an uplink measurement result of the uplink signal measured by the base station to the base station controller, where
the target super cell includes at least two sectors, the at least two sectors include at least one relay layer channel, and the relay layer channel includes a standalone dedicated control channel SDCCH with a same time-frequency resource or a physical random access channel PRACH with a same time-frequency resource.

In a first possible implementation manner of the second aspect, the message includes: identifier information of time-frequency resources corresponding to the relay layer channel and/or identifier information of the terminal device; or
identifier information of time-frequency resources corresponding to the relay layer channel and/or identifier information of the terminal device, and identifier information of the to-be-measured sector.

According to a third aspect, an embodiment of the present invention provides a signal measurement apparatus, including:
a message sending module, configured to send, by a base station controller, a message to instruct a base station to measure an uplink signal of a terminal device in a to-be-measured sector in a target super cell, where the terminal device receives or sends a signal on a relay layer channel of the target super cell, so that the base station measures, according to the message, the uplink signal on a physical channel corresponding to the relay layer channel in the to-be-measured sector, obtains an uplink measurement result of the to-be-measured sector, and reports the uplink measurement result to the base station controller; and
an uplink measurement result acquiring module, configured to acquire the uplink measurement result of the to-be-measured sector by using the message sending module, where
the target super cell includes at least two sectors, the at least two sectors include at least one relay layer channel, and the relay layer channel includes a standalone dedicated control channel SDCCH or a physical random access channel, PRACH with a same time-frequency resources.

In a first possible implementation manner of the third aspect, the apparatus further includes:
a target sector determining module, configured to: after the base station controller acquires the uplink measurement result of the to-be-measured sector, determine a target sector for the terminal device according to the uplink measurement result of the to-be-measured sector acquired by the uplink measurement result acquiring module.

According to the first possible implementation manner of the third aspect, in a second possible implementation manner, the apparatus further includes: a target sector handover module, configured to: after the target sector is determined for the terminal device, hand over the terminal device to the target sector determined by the target sector determining module.

According to the third aspect or either the first or second possible implementation manner of the third aspect, in a third possible implementation manner, a first relay layer channel processing module is configured to: before the base station controller sends the message to instruct the base station to measure the uplink signal of the terminal device in the to-be-measured sector in the target super cell, acquire downlink signal measurement results of super cells reported by the terminal device;
determine the target super cell among the super cells according to the downlink signal measurement results of the super cells; and
hand over the terminal device to the relay layer channel.

According to the third aspect or any one of the first to third possible implementation manners of the third aspect, in a fourth possible implementation manner, the target super cell is a neighboring super cell of a serving super cell in which the terminal device is located;
or,
the target super cell is a serving super cell in which the terminal device is located.

According to the first possible implementation manner of the third aspect, in a fifth possible implementation manner, the apparatus further includes:
a target sector assigning module, configured to: after the target sector is determined for the terminal device, allocate a channel to the terminal device in the target sector determined by the target sector determining module, and assign the channel to the terminal device.

According to the fifth possible implementation manner of the third aspect, in a sixth possible implementation manner,
the relay layer channel includes the SDCCH, and the target super cell is a serving super cell in which the terminal device is located; and
a second relay layer channel processing module is configured to: before the base station controller sends the message to instruct the base station to measure the uplink signal of the terminal device in the to-be-measured sector in the target super cell, receive an access request message sent by the terminal device; and
send an immediate assignment message to the terminal device according to the access request message, and assign the terminal device to the SDCCH, so that the terminal device receives or sends a signal on the SDCCH.

According to the fifth possible implementation manner of the third aspect, in a seventh possible implementation manner, the relay layer channel includes the PRACH, and the target super cell is a super cell on which the terminal device camps; and
an access request message receiving module is configured to: before the base station controller sends the message to instruct the base station to measure the uplink signal of the terminal device in the to-be-measured sector in the target super cell, receive an access request message sent by the terminal device on the PRACH.

According to the third aspect or any one of the first to seventh possible implementation manners of the third aspect, in an eighth possible implementation manner, the target sector determining module is specifically configured to determine, among sectors in which uplink measurement is performed for the relay layer channel used by the terminal device, a sector with a top priority as the target sector according to the uplink measurement result.

According to the third aspect or any one of the first to eighth possible implementation manners of the third aspect, in a ninth possible implementation manner, the message includes: identifier information of time-frequency resources corresponding to the relay layer channel and/or identifier information of the terminal device; or
identifier information of time-frequency resources corresponding to the relay layer channel and/or identifier information of the terminal device, and identifier information of the to-be-measured sector.

According to a fourth aspect, an embodiment of the present invention provides a signal measurement apparatus, including:
a message receiving module, configured to receive a message sent by a base station controller;
an uplink signal measuring module, configured to measure, according to the message received by the message receiving module, an uplink signal on a physical channel corresponding to a relay layer channel of a target super cell in a to-be-measured sector; and
an uplink measurement result reporting module, configured to report an uplink measurement result of the uplink signal measured by the uplink signal measuring module to the base station controller, where
the target super cell includes at least two sectors, the at least two sectors include at least one relay layer channel, and the relay layer channel includes a standalone dedicated control channel SDCCH with a same time-frequency resource or a physical random access channel PRACH with a same time-frequency resource.

In a first possible implementation manner of the fourth aspect, the message includes: identifier information of time-frequency resources corresponding to the relay layer channel and/or identifier information of the terminal device; or
identifier information of time-frequency resources corresponding to the relay layer channel and/or identifier information of the terminal device, and identifier information of the to-be-measured sector.

In the signal measurement method and apparatus according to the embodiments of the present invention, a base station controller sends a message to instruct a base station to measure an uplink signal of a terminal device in a to-be-measured sector in a target super cell, so that the base station measures, according to the message, the uplink signal on a physical channel corresponding to a relay layer channel in the to-be-measured sector, obtains an uplink measurement result of the to-be-measured sector, and reports the uplink measurement result to the base station controller. In this way, in a scenario of a super cell, the base station controller can acquire the uplink measurement result, thereby implementing mobility management on the terminal device and assigning the sector to the terminal device.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a flowchart of a signal measurement method according to Embodiment 1 of the present invention;
FIG. 2 is a flowchart of a signal measurement method according to Embodiment 2 of the present invention;
FIG. 3 is a flowchart of a signal measurement method according to Embodiment 3 of the present invention;
FIG. 4 is a flowchart of a signal measurement method according to Embodiment 4 of the present invention;
FIG. 5 is a flowchart of a signal measurement method according to Embodiment 5 of the present invention;
FIG. 6 is a schematic structural diagram of a signal measurement apparatus according to Embodiment 6 of the present invention;
FIG. 7 is a schematic structural diagram of a signal measurement apparatus according to Embodiment 7 of the present invention;
FIG. 8 is a schematic structural diagram of a signal measurement apparatus according to Embodiment 8 of the present invention;
FIG. 9 is a flowchart of a schematic structural diagram of a signal measurement apparatus according to Embodiment 9 of the present invention;
FIG. 10 is a flowchart of a schematic structural diagram of a signal measurement apparatus according to Embodiment 10 of the present invention;
FIG. 11 is a schematic structural diagram of a base station controller according to Embodiment 11 of the present invention; and
FIG. 12 is a schematic structural diagram of a base station according to Embodiment 12 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention.

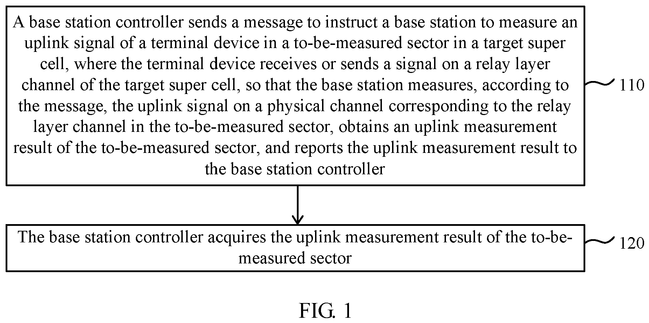

FIG. 1 is a flowchart of a signal measurement method according to Embodiment 1 of the present invention. The method in this embodiment is applied to a situation in which a base station controller acquires an uplink measurement result of a to-be-measured sector in a scenario of a super cell. The method in this embodiment includes the following steps:
Step 110: A base station controller sends a message to instruct a base station to measure an uplink signal of a terminal device in a to-be-measured sector in a target super cell, where the terminal device receives or sends a signal on a relay layer channel of the target super cell, so that the base station measures, according to the message, the uplink signal on a physical channel corresponding to the relay layer channel in the to-be-measured sector, obtains an uplink measurement result of the to-be-measured sector, and reports the uplink measurement result to the base station controller.

Because a super cell is formed by combining existing GSM sectors, each super cell may have a plurality of sectors. For example, a super cell formed by combining 3 existing GSM sectors has 3 sectors, and a super cell formed by combining 6 existing GSM sectors has 6 sectors. The relay layer channel may be configured in all timeslots of a main BCCH carrier, partial timeslots of the main BCCH carrier, all timeslots of all traffic carriers, partial timeslots of all traffic carriers, all timeslots of partial traffic carriers, or partial timeslots of partial traffic carriers. The target super cell includes at least two sectors, the at least two sectors include at least one physical channel with same time-frequency resources, and the relay layer channel includes one or more of the at least one physical channel with same time-frequency resources. In this step, the base station controller sends the message to instruct the base station to measure the uplink signal of the terminal device in the to-be-measured sector in the target super cell, so that the base station measures, according to the message, the uplink signal on the physical channel corresponding to the relay layer channel in the to-be-measured sector, obtains the uplink measurement result of the to-be-measured sector, and reports the uplink measurement result to the base station controller, so as to enable the base station controller to acquire the uplink measurement result of the to-be-measured sector.

Step 120: The base station controller acquires the uplink measurement result of the to-be-measured sector.

Specifically, the base station controller sends the message to instruct the base station to measure the uplink signal of the terminal device in the to-be-measured sector in the target super cell, so that the base station measures, according to the message, the uplink signal on the physical channel corresponding to the relay layer channel in the to-be-measured sector, obtains the uplink measurement result of the to-be-measured sector, and reports the uplink measurement result to the base station controller; therefore, the base station controller can acquire the uplink measurement result.

In the signal measurement method according to this embodiment, a base station controller sends a message to instruct a base station to measure an uplink signal of a terminal device in a to-be-measured sector in a target super cell, so that the base station measures, according to the message, the uplink signal on a physical channel corresponding to a relay layer channel in the to-be-measured sector, obtains an uplink measurement result of the to-be-measured sector, and reports the uplink measurement result to the base station controller. In this way, in a scenario of a super cell, the base station controller can acquire the uplink measurement result, thereby implementing mobility management on the terminal device and assigning a sector to the terminal device.

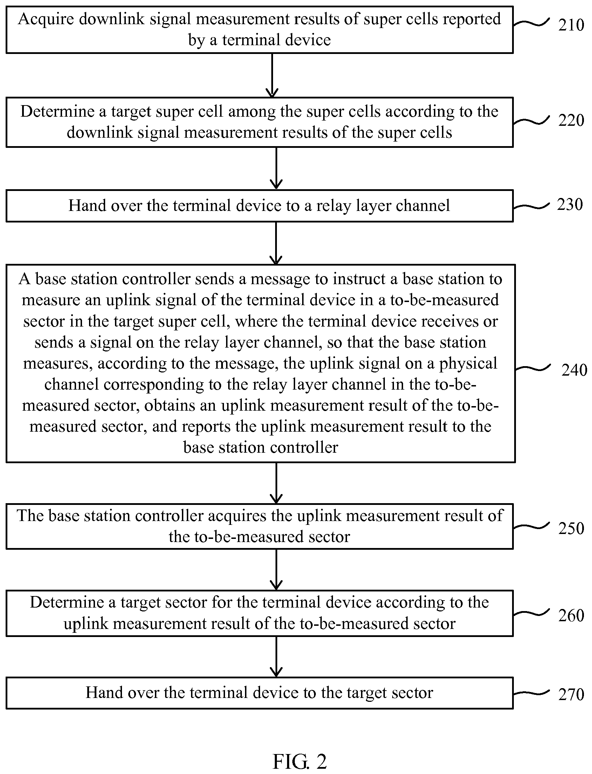

FIG. 2 is a flowchart of a signal measurement method according to Embodiment 2 of the present invention. This embodiment is further optimized based on the foregoing Embodiment 1. Referring to FIG. 2, the method in this embodiment may include:
Step 210: Acquire downlink signal measurement results of super cells reported by a terminal device.
Step 220: Determine a target super cell among the super cells according to the downlink signal measurement results of the super cells.

The target super cell may be a neighboring super cell of a serving super cell in which the terminal device is located, or a serving super cell in which the terminal device is located. The target super cell is determined according to the downlink signal measurement results of the super cells acquired by a base station controller from the terminal device. When the serving super cell in which the terminal device is located is determined as the target super cell, a handover between sectors in the super cell is triggered; when the neighboring super cell is determined as the target super cell, a handover between sectors in the super cells is triggered.

Step 230: Hand over the terminal device to a relay layer channel.

Step 240: A base station controller sends a message to instruct a base station to measure an uplink signal of the terminal device in a to-be-measured sector in the target super cell, where the terminal device receives or sends a signal on the relay layer channel, so that the base station measures, according to the message, the uplink signal on a physical channel corresponding to the relay layer channel in the to-be-measured sector, obtains an uplink measurement result of the to-be-measured sector, and reports the uplink measurement result to the base station controller.

The to-be-measured sector may be selected by the base station controller according to loads, alarm statuses or priorities of sectors; or, a message may be sent to the base station to inform the base station of a sector that is determined as the to-be-measured sector. The to-be-measured sector may be all sectors in the target super cell or may be partial sectors in the target super cell.

Step 250: The base station controller acquires the uplink measurement result of the to-be-measured sector.

Step 260: Determine a target sector for the terminal device according to the uplink measurement result of the to-be-measured sector.

For example, the target sector may be determined for the terminal device according to the uplink measurement result in the following manner:
determining, among sectors in which uplink measurement is performed for the relay layer channel used by the terminal device, a sector with a top priority as the target sector according to the uplink measurement result. It should be noted that, if the sector with the top priority determined according to the measurement result cannot accommodate the terminal device, for example, the determined sector with the top priority does not have sufficient resource that may be allocated to the terminal device, a sector with a second highest priority is determined as the target sector.

Step 270: Hand over the terminal device to the target sector.

In the signal measurement method according to this embodiment, downlink signal measurement results of super cells reported by a terminal device are acquired to determine a target super cell; the terminal device is handed over to a relay layer channel; a base station is instructed to measure an uplink signal of the terminal device in a to-be-measured sector in the target super cell; an uplink measurement result of the to-be-measured sector is acquired; a target sector is determined according to the uplink measurement result; the terminal device is handed over to the target sector. In this way, in a scenario of a super cell, a base station controller can determine the target sector for the terminal device and hand over the terminal device to the target sector.

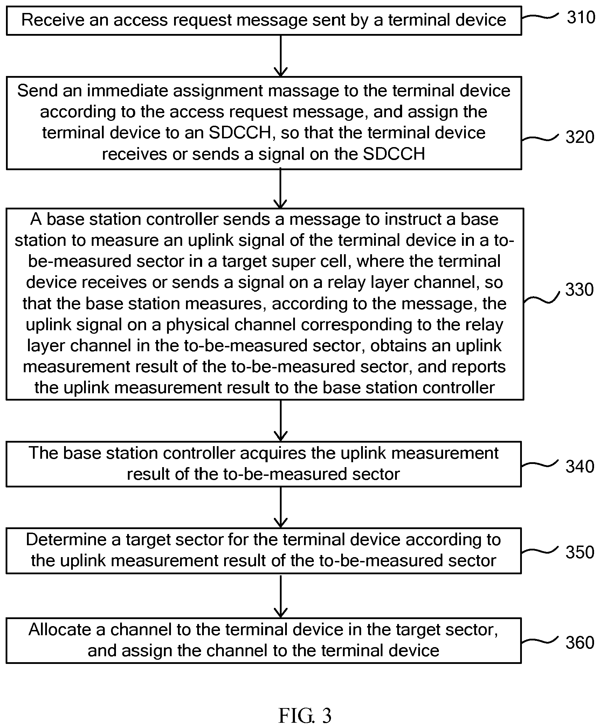

FIG. 3 is a flowchart of a signal measurement method according to Embodiment 3 of the present invention. This embodiment is further optimized based on the foregoing Embodiment 1. An implementation scenario of this embodiment is: a sector is assigned to a terminal device that accesses an SDCCH of a relay layer channel. Referring to FIG. 3, the method in this embodiment may include:
Step 310: Receive an access request message sent by a terminal device.
Step 320: Send an immediate assignment message to the terminal device according to the access request message, and assign the terminal device to an SDCCH, so that the terminal device receives or sends a signal on the SDCCH.

A relay layer channel includes a standalone dedicated control channel SDCCH, and a target super cell is a serving super cell in which the terminal device is located. In this step, the terminal device is assigned to the SDCCH of the relay layer channel.

Step 330: A base station controller sends a message to instruct a base station to measure an uplink signal of the terminal device in a to-be-measured sector in a target super cell, where the terminal device receives or sends a signal on a relay layer channel, so that the base station measures, according to the message, the uplink signal on a physical channel corresponding to the relay layer channel in the to-be-measured sector, obtains an uplink measurement result of the to-be-measured sector, and reports the uplink measurement result to the base station controller.

Step 340: The base station controller acquires the uplink measurement result of the to-be-measured sector.

Step 350: Determine a target sector for the terminal device according to the uplink measurement result of the to-be-measured sector.

Among sectors in which uplink measurement is performed for the relay layer channel used by the terminal device, a sector with a top priority is determined as the target sector according to the uplink measurement result.

Step 360: Allocate a channel to the terminal device in the target sector, and assign the channel to the terminal device.

If the base station controller fails to determine the sector with the top priority, the base station controller firstly assigns the terminal device to a traffic channel of the relay layer channel, then performs uplink measurement for the traffic channel according to sectors in the target super cell, obtains an uplink measurement result of the traffic channel, and then determines the sector with the top priority as the target sector according to the measurement result.

In the signal measurement method according to this embodiment, an access request message sent by a terminal device is received, an immediate assignment message is sent to the terminal device according to the access request message, and the terminal device is assigned to an SDCCH, so that the terminal device receives or sends a signal on the SDCCH, and a base station can measure an uplink signal sent by the terminal device in a to-be-measured sector in a target super cell, obtain an uplink measurement result, and allocate a channel to the terminal device in a target sector according to the uplink measurement result. In this way, in a scenario of a super cell, a base station controller can allocate the channel to the terminal device in the target sector and assign the channel to the terminal device.

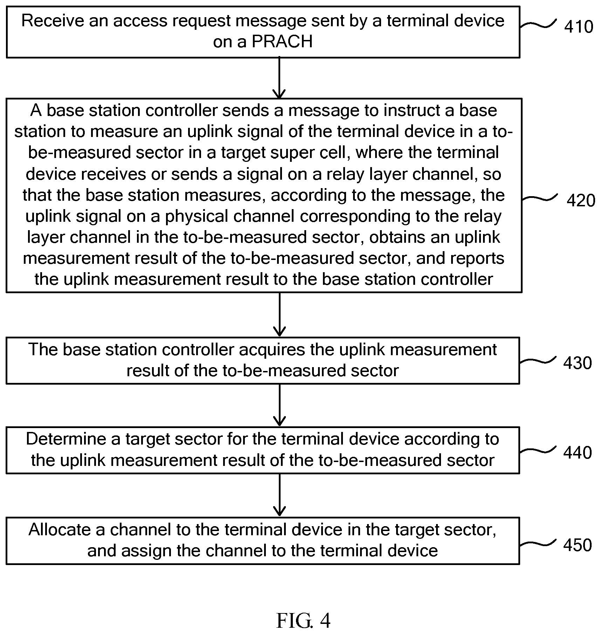

FIG. 4 is a flowchart of a signal measurement method according to Embodiment 4 of the present invention. This embodiment is further optimized based on the foregoing Embodiment 1. An implementation scenario of this embodiment is: a sector is assigned to a terminal device that accesses a PRACH of a relay layer channel. Referring to FIG. 4, the method in this embodiment may include:
Step 410: Receive an access request message sent by a terminal device on a PRACH.

A relay layer channel includes a physical random access channel PRACH, and a target super cell is a super cell on which the terminal device camps.

Step 420: A base station controller sends a message to instruct a base station to measure an uplink signal of the terminal device in a to-be-measured sector in a target super cell, where the terminal device receives or sends a signal on a relay layer channel, so that the base station measures, according to the message, the uplink signal on a physical channel corresponding to the relay layer channel in the to-be-measured sector, obtains an uplink measurement result of the to-be-measured sector, and reports the uplink measurement result to the base station controller.

Step 430: The base station controller acquires the uplink measurement result of the to-be-measured sector.

Step 440: Determine a target sector for the terminal device according to the uplink measurement result of the to-be-measured sector.

Among sectors in which uplink measurement is performed for the relay layer channel used by the terminal device, a sector with a top priority is determined as the target sector according to the uplink measurement result.

Step 450: Allocate a channel to the terminal device in the target sector, and assign the channel to the terminal device.

If the base station controller determines the sector with the top priority as the target sector, the base station controller can allocate an SDCCH channel or a traffic channel of the target sector to the terminal device in the target sector; if the base station controller fails to determine the sector with the top priority, the base station controller immediately assigns the terminal device to a traffic channel or an SDCCH of the relay layer channel, then performs uplink measurement for the traffic channel or the SDCCH according to sectors in the target super cell, acquires an uplink measurement result of the traffic channel or the SDCCH, and determines the sector with the top priority as the target sector according to the measurement result.

In the signal measurement method according to this embodiment, an access request message sent by a terminal device is received on a PRACH, so that a base station can measure an uplink signal sent by the terminal device in a to-be-measured sector in a target super cell, acquire an uplink measurement result, and allocate a channel to the terminal device in the target sector according to the uplink measurement result. In this way, in a scenario of a super cell, a base station controller can allocate the channel to the terminal device in the target sector and assign the channel to the terminal device.

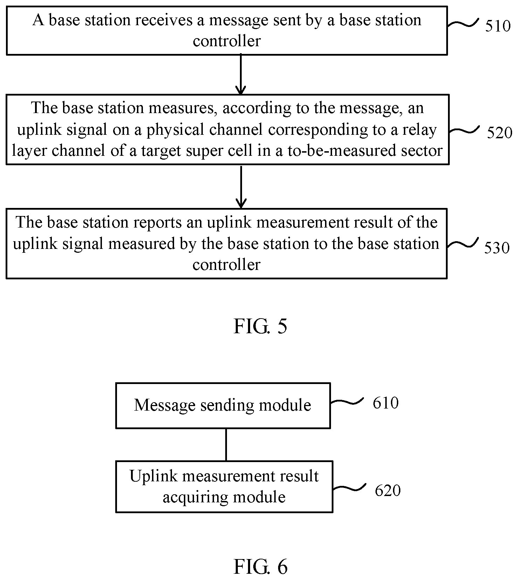

FIG. 5 is a flowchart of a signal measurement method according to Embodiment 5 of the present invention. The method in this embodiment is applied to a situation in which a target sector is determined for a terminal device in a scenario of a super cell. The method in this embodiment includes the following steps:
Step 510: A base station receives a message sent by a base station controller.
Step 520: The base station measures, according to the message, an uplink signal on a physical channel corresponding to a relay layer channel of a target super cell in a to-be-measured sector.
Step 530: The base station reports an uplink measurement result the uplink signal measured by the base station to the base station controller.

The target super cell includes at least two sectors, the at least two sectors include at least one physical channel with same time-frequency resources, and each relay layer channel includes one or more of the at least one physical channel with same time-frequency resources. The message includes: identifier information of time-frequency resources corresponding to the relay layer channel and/or identifier information of the terminal device; or identifier information of time-frequency resources corresponding to the relay layer channel and/or identifier information of the terminal device, and identifier information of the to-be-measured sector.

In the signal measurement method according to this embodiment, a base station receives a message sent by a base station controller, measures, according to the message, an uplink signal on a physical channel corresponding to a relay layer channel in a to-be-measured sector, and reports an uplink measurement result of the uplink signal to the base station controller. In this way, in a scenario of a super cell, the uplink measurement result may be reported to the base station controller, so that the base station controller determines a target sector for the terminal device, performs mobility management on the terminal device, and assigns the sector to the terminal device.

FIG. 6 is a schematic structural diagram of a signal measurement apparatus according to Embodiment 6 of the present invention. The apparatus in this embodiment is applied to a situation in which a target sector is determined for a terminal device in a scenario of a super cell. Referring to FIG. 6, the signal measurement apparatus includes the following modules: a message sending module 610 and an uplink measurement result acquiring module 620.

The message sending module 610 is configured to send, by a base station controller, a message to instruct a base station to measure an uplink signal of a terminal device in a to-be-measured sector in a target super cell, where the terminal device receives or sends a signal on a relay layer channel, so that the base station measures, according to the message, the uplink signal on a physical channel corresponding to the relay layer channel in the to-be-measured sector, obtains an uplink measurement result of the to-be-measured sector, and reports the uplink measurement result to the base station controller. The uplink measurement result acquiring module 620 is configured to acquire the uplink measurement result of the to-be-measured sector by using the message sending module, where the target super cell includes at least two sectors, the at least two sectors include at least one physical channel with same time-frequency resources, and each relay layer channel includes one or more of the at least one physical channel with same time-frequency resources.

The signal measurement apparatus according to this embodiment may be used to execute a technical solution in the method embodiment shown in FIG. 1. The implementation principle and technical effect of the signal measurement apparatus are similar to those of the method embodiment, and are not repeated herein.

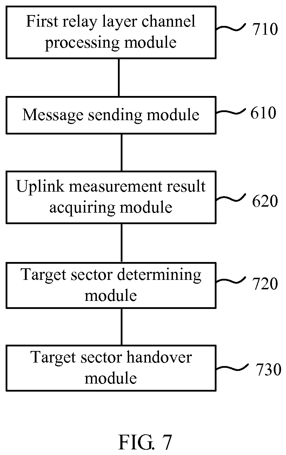

FIG. 7 is a schematic structural diagram of a signal measurement apparatus according to Embodiment 7 of the present invention. Referring to FIG. 7, in addition to the modules in the foregoing Embodiment 6, the signal measurement apparatus further includes the following modules: a first relay layer channel processing module 710, a target sector determining module 720, and a target sector handover module 730.

The first relay layer channel processing module 710 is configured to: before the base station controller sends the message to instruct the base station to measure the uplink signal of the terminal device in the to-be-measured sector in the target super cell, acquire downlink signal measurement results of super cells reported by the terminal device, determine the target super cell among the super cells according to the downlink signal measurement results of the super cells, and hand over the terminal device to the relay layer channel. The target sector determining module 720 is configured to: after the base station controller acquires the uplink measurement result of the to-be-measured sector, determine a target sector for the terminal device according to the uplink measurement result of the to-be-measured sector acquired by the uplink measurement result acquiring module. The target sector handover module 730 is configured to: after the target sector is determined for the terminal device, hand over the terminal device to the target sector determined by the target sector determining module. The target super cell is a neighboring super cell of a serving super cell in which the terminal device is located, or a serving super cell in which the terminal device is located.

The signal measurement apparatus according to this embodiment may be used to execute a technical solution in the method embodiment shown in FIG. 2. The implementation principle and technical effect of the signal measurement apparatus are similar to those of the method embodiment, and are not repeated herein.

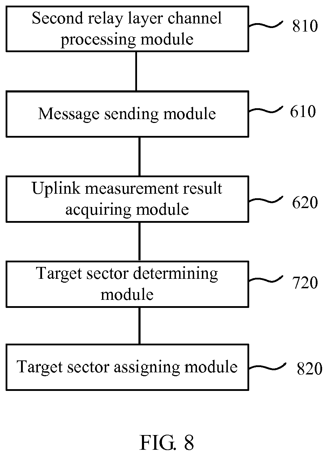

FIG. 8 is a schematic structural diagram of a signal measurement apparatus according to Embodiment 8 of the present invention. Referring to FIG. 8, in addition to the modules in the foregoing Embodiment 6, the signal measurement apparatus further includes the following modules: a second relay layer channel processing module 810 and a target sector assigning module 820.

The second relay layer channel processing module 810 is configured to: before the base station controller sends the message to instruct the base station to measure the uplink signal of the terminal device in the to-be-measured sector in the target super cell, receive an access request message sent by the terminal device; and send an immediate assignment message to the terminal device according to the access request message, and assign the terminal device to an SDCCH, so that the terminal device receives or sends a signal on the SDCCH. The target sector assigning module 820 is configured to: after a target sector is determined for the terminal device, allocate a channel to the terminal device in the target sector determined by the target sector determining module, and assign the channel to the terminal device.

The signal measurement apparatus according to this embodiment may be used to execute a technical solution in the method embodiment shown in FIG. 3. The implementation principle and technical effect of the signal measurement apparatus are similar to those of the method embodiment, and are not repeated herein.

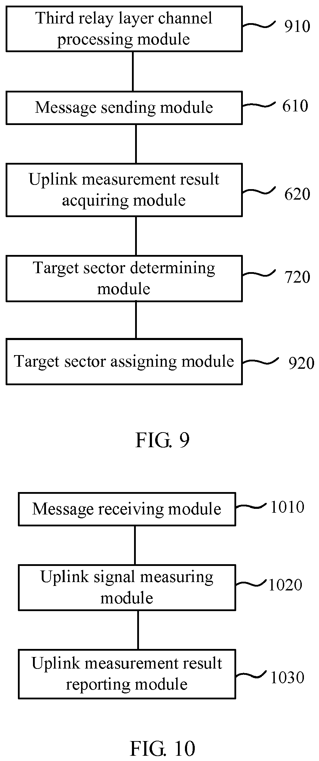

FIG. 9 is a schematic structural diagram of a signal measurement apparatus according to Embodiment 9 of the present invention. Referring to FIG. 9, in addition to the modules in the foregoing Embodiment 6, the signal measurement apparatus further includes the following modules: a third relay layer channel processing module 910 and a target sector assigning module 920.

The third relay layer channel processing module 910 is configured to: before the base station controller sends the message to instruct the base station to measure the uplink signal of the terminal device in the to-be-measured sector in the target super cell, receive an access request message sent by the terminal device on a PRACH. The target sector assigning module 920 is configured to: after a target sector is determined for the terminal device, allocate a channel to the terminal device in the target sector determined by the target sector determining module, and assign the channel to the terminal device.

The signal measurement apparatus according to this embodiment may be used to execute a technical solution in the method embodiment shown in FIG. 4. The implementation principle and technical effect of the signal measurement apparatus are similar to those of the method embodiment, and are not repeated herein.

FIG. 10 is a schematic structural diagram of a signal measurement apparatus according to Embodiment 10 of the present invention. The apparatus in this embodiment is applied to a situation in which a target sector is determined for a terminal device in a scenario of a super cell. Referring to FIG. 10, the signal measurement apparatus includes the following modules: a message receiving module 1010, an uplink signal measuring module 1020, and an uplink measurement result reporting module 1030.

The message receiving module 1010 is configured to receive a message sent by a base station controller; the uplink signal measuring module 1020 is configured to measure, according to the message received by the message receiving module, an uplink signal on a physical channel corresponding to a relay layer channel in a to-be-measured sector; the uplink measurement result reporting module 1030 is configured to report an uplink measurement result of the uplink signal by the uplink signal measuring module to the base station controller, where the target super cell includes at least two sectors, the at least two sectors include at least one physical channel with same time-frequency resources, and the relay layer channel includes one or more of the at least one physical channel with same time-frequency resources.

The signal measurement apparatus according to this embodiment may be used to execute a technical solution in the method embodiment shown in FIG. 5. The implementation principle and technical effect of the signal measurement apparatus are similar to those of the method embodiment, and are not repeated herein.

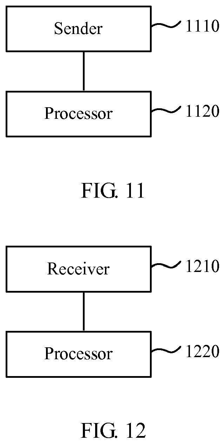

FIG. 11 is a schematic structural diagram of a base station controller according to Embodiment 11 of the present invention. The base station controller in this embodiment is applied to a situation in which a target sector is determined for a terminal device in a scenario of a super cell. Referring to FIG. 11, the base station controller includes: a sender 1110 and a processor 1120.

The sender 1110 is configured to send a message to instruct a base station to measure an uplink signal of a terminal device in a to-be-measured sector in a target super cell, where the terminal device receives or sends a signal on a relay layer channel of the target super cell, so that the base station measures, according to the message, the uplink signal on a physical channel corresponding to the relay layer channel in the to-be-measured sector, obtains an uplink measurement result of the to-be-measured sector, and reports the uplink measurement result to a base station controller; the processor 1120 is configured to acquire the uplink measurement result of the to-be-measured sector by using a message sending module, where the target super cell includes at least two sectors, the at least two sectors include at least one physical channel with same time-frequency resources, and the relay layer channel includes one or more of the at least one physical channel with same time-frequency resources.

Further, the processor 1120 is configured to: after the base station controller acquires the uplink measurement result of the to-be-measured sector, determine a target sector for the terminal device according to the uplink measurement result of the to-be-measured sector acquired by an uplink measurement result acquiring module.

Further, the processor 1120 is configured to: after the target sector is determined for the terminal device, hand over the terminal device to the target sector determined by a target sector determining module.

Further, the processor 1120 is configured to: before the base station controller sends the message to instruct the base station to measure the uplink signal of the terminal device in the to-be-measured sector in the target super cell, acquire downlink signal measurement results of super cells reported by the terminal device, determine the target super cell among the super cells according to the downlink signal measurement results of the super cells, and hand over the terminal device to the relay layer channel.

Further, the processor 1120 is configured to: after the target sector is determined for the terminal device, allocate a channel to the terminal device in the target sector determined by the target sector determining module, and assign the channel to the terminal device.

Further, the processor 1120 is configured to: before the base station controller sends the message to instruct the base station to measure the uplink signal of the terminal device in the to-be-measured sector in the target super cell, receive an access request message sent by the terminal device; and send an immediate assignment message to the terminal device according to the access request message, and assign the terminal device to an SDCCH, so that the terminal device receives or sends a signal on the SDCCH.

Further, the processor 1120 is configured to: before the base station controller sends the message to instruct the base station to measure the uplink signal of the terminal device in the to-be-measured sector in the target super cell, receive an access request message sent by the terminal device on a PRACH; and send an immediate assignment message to the terminal device according to the access request message sent on the PRACH, and assign the terminal device to the PRACH, so that the terminal device receives or sends a signal on the PRACH.

Further, the processor 1120 is configured to determine, among sectors in which uplink measurement is performed for the relay layer channel used by the terminal device, a sector with a top priority as the target sector according to the uplink measurement result.

The base station controller according to this embodiment sends a message to instruct a base station to measure an uplink signal of a terminal device in a to-be-measured sector in a target super cell, so that the base station measures, according to the message, the uplink signal on a physical channel corresponding to a relay layer channel in the to-be-measured sector, obtains an uplink measurement result of the to-be-measured sector, and reports the uplink measurement result to the base station controller. In this way, in a scenario of a super cell, the base station controller can determine a target sector for the terminal device, thereby controlling a sector handover of the terminal device and assigning the sector to the terminal device.

FIG. 12 is a schematic structural diagram of a base station according to Embodiment 12 of the present invention. The base station in this embodiment is applied to a situation in which an uplink measurement result is reported to a base station controller in a scenario of a super cell. Referring to FIG. 12, the base station includes: a receiver 1210 and a processor 1220.

The receiver 1210 is configured to receive a message sent by a base station controller; the processor 1220 is configured to measure, according to the message received by a message receiving module, an uplink signal on a physical channel corresponding to a relay layer channel in a to-be-measured sector; an uplink measurement result reporting module is configured to report an uplink measurement result of measurement on the uplink signal by an uplink signal measuring module to the base station controller, where the target super cell includes at least two sectors, the at least two sectors include at least one physical channel with same time-frequency resources, and the relay layer channel includes one or more of the at least one physical channel with same time-frequency resources. The message includes: identifier information of time-frequency resources corresponding to the relay layer channel and/or identifier information of the terminal device; or identifier information of time-frequency resources corresponding to the relay layer channel and/or identifier information of the terminal device, and identifier information of the to-be-measured sector.

The base station according to this embodiment receives a message sent by a base station controller, measures, according to the message, an uplink signal on a physical channel corresponding to a relay layer channel in a to-be-measured sector, and reports an uplink measurement result of the uplink signal to the base station controller. In this way, in a scenario of a super cell, the uplink measurement result may be reported to the base station controller, so that the base station controller determines a target sector for the terminal device, performs mobility management on the terminal device, and assigns the sector to the terminal device.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A signal measurement method, **characterized by** comprising:
sending (110), by a base station controller, a message to instruct a base station to measure an uplink signal of a terminal device in a to-be-measured sector in a target super cell, wherein the terminal device receives or sends a signal on a relay layer channel of the target super cell, so that the base station measures, according to the message, the uplink signal on a physical channel corresponding to the relay layer channel in the to-be-measured sector, obtains an uplink measurement result of the to-be-measured sector, and reports the uplink measurement result to the base station controller; and
acquiring (120), by the base station controller, the uplink measurement result of the to-be-measured sector, wherein
the target super cell comprises at least two sectors, the at least two sectors comprise at least one relay layer channel, and the relay layer channel comprises a standalone dedicated control channel, SDCCH, with a same time-frequency resource or a physical random access channel, PRACH, with a same time-frequency resource.

2. The method according to claim 1, wherein after the acquiring, by the base station controller, the uplink measurement result of the to-be-measured sector, the method further comprises:
determining a target sector for the terminal device according to the uplink measurement result of the to-be-measured sector.

3. The method according to claim 2, wherein after the determining a target sector for the terminal device, the method further comprises:
handing over the terminal device to the target sector; or
allocating a channel to the terminal device in the target sector, and assigning the channel to the terminal device.

4. The method according to any one of claims 1 to 3, wherein before the sending, by a base station controller, a message to instruct a base station to measure an uplink signal of a terminal device in a to-be-measured sector in a target super cell, the method further comprises:
acquiring downlink signal measurement results of super cells reported by the terminal device;
determining the target super cell among the super cells according to the downlink signal measurement results of the super cells; and
handing over the terminal device to the relay layer channel.

5. The method according to any one of claims 1 to 4, wherein the relay layer channel comprises the SDCCH, and the target super cell is a serving super cell in which the terminal device is located; and
before the sending, by a base station controller, a message to instruct a base station to measure an uplink signal of a terminal device in a to-be-measured sector in a target super cell, the method further comprises:
receiving an access request message sent by the terminal device; and
sending an immediate assignment message to the terminal device according to the access request message, and assigning the terminal device to the SDCCH, so that the terminal device receives or sends a signal on the SDCCH.

6. The method according to any one of claims 1 to 4, wherein the relay layer channel comprises the PRACH, and the target super cell is a super cell on which the terminal device camps; and
before the sending, by a base station controller, a message to instruct a base station to measure an uplink signal of a terminal device in a to-be-measured sector in a target super cell, the method further comprises:
receiving an access request message sent by the terminal device on the PRACH.

7. A signal measurement method, **characterized by** comprising:
receiving (510), by a base station, a message sent by a base station controller;
measuring (520), by the base station according to the message, an uplink signal on a physical channel corresponding to a relay layer channel of a target super cell in a to-be-measured sector; and
reporting (530), by the base station, an uplink measurement result of the uplink signal measured by the base station to the base station controller, wherein
the target super cell comprises at least two sectors, the at least two sectors comprise at least one relay layer channel, and the relay layer channel comprises a standalone dedicated control channel, SDCCH, with a same time-frequency resource or a physical random access channel, PRACH, with a same time-frequency resource.

8. A base station controller, **characterized by** comprising:
a message sending module (610), configured to send, by the base station controller, a message to instruct a base station to measure an uplink signal of a terminal device in a to-be-measured sector in a target super cell, wherein the terminal device receives or sends a signal on a relay layer channel of the target super cell, so that the base station measures, according to the message, the uplink signal on a physical channel corresponding to the relay layer channel in the to-be-measured sector, obtains an uplink measurement result of the to-be-measured sector, and reports the uplink measurement result to the base station controller; and
an uplink measurement result acquiring module (620), configured to acquire the uplink measurement result of the to-be-measured sector by using the message sending module, wherein
the target super cell comprises at least two sectors, the at least two sectors comprise at least one relay layer channel, and the relay layer channel comprises a standalone dedicated control channel, SDCCH, or a physical random access channel, PRACH, with a same time-frequency resource.

9. The apparatus according to claim 8, further comprising:
a target sector determining module, configured to: after the base station controller acquires the uplink measurement result of the to-be-measured sector, determine a target sector for the terminal device according to the uplink measurement result of the to-be-measured sector acquired by the uplink measurement result acquiring module.

10. The apparatus according to claim 9, further comprising:
a target sector handover module, configured to: after the target sector is determined for the terminal device, hand over the terminal device to the target sector determined by the target sector determining module; or
a target sector assigning module, configured to: after the target sector is determined for the terminal device, allocate a channel to the terminal device in the target sector determined by the target sector determining module, and assign the channel to the terminal device.

11. The apparatus according to any one of claims 8 to 10, further comprising:
a first relay layer channel processing module, configured to: before the base station controller sends the message to instruct the base station to measure the uplink signal of the terminal device in the to-be-measured sector in the target super cell, acquire downlink signal measurement results of super cells reported by the terminal device;
determine the target super cell among the super cells according to the downlink signal measurement results of the super cells; and
hand over the terminal device to the relay layer channel.

12. The apparatus according to any one of claims 8 to 11, further comprising a second relay layer channel processing module, wherein:
the relay layer channel comprises the SDCCH, and the target super cell is a serving super cell in which the terminal device is located; and
the second relay layer channel processing module is configured to: before the base station controller sends the message to instruct the base station to measure the uplink signal of the terminal device in the to-be-measured sector in the target super cell, receive an access request message sent by the terminal device, and
send an immediate assignment message to the terminal device according to the access request message, and assign the terminal device to the SDCCH, so that the terminal device receives or sends a signal on the SDCCH.

13. The apparatus according to any one of claims 8 to 11, wherein the relay layer channel comprises the PRACH, and the target super cell is a super cell on which the terminal device camps; and
a third relay layer channel processing module is configured to: before the base station controller sends the message to instruct the base station to measure the uplink signal of the terminal device in the to-be-measured sector in the target super cell, receive an access request message sent by the terminal device on the PRACH.

14. A signal measurement apparatus, **characterized by** comprising:
a message receiving module (1010), configured to receive a message sent by a base station controller;
an uplink signal measuring module (1020), configured to measure, according to the message received by the message receiving module, an uplink signal on a physical channel corresponding to a relay layer channel of a target super cell in a to-be-measured sector; and
an uplink measurement result reporting module (1030), configured to report an uplink measurement result of the uplink signal measured by the uplink signal measuring module to the base station controller, wherein
the target super cell comprises at least two sectors, the at least two sectors comprise at least one relay layer channel, and the relay layer channel comprises a standalone dedicated control channel, SDCCH, with a same time-frequency resource or a physical random access channel, PRACH, with a same time-frequency resource.

15. The apparatus according to claim 14, wherein the message comprises: identifier information of time-frequency resources corresponding to the relay layer channel and/or identifier information of the terminal device; or
identifier information of time-frequency resources corresponding to the relay layer channel and/or identifier information of the terminal device, and identifier information of the to-be-measured sector.

## Patentansprüche

1. Signalmessverfahren, **dadurch gekennzeichnet, dass** es Folgendes umfasst:
Senden (110) einer Nachricht durch eine Basisstationsteuerung, um eine Basisstation anzuweisen, ein Aufwärtsstreckensignal einer Endgerätevorrichtung in einem zu messenden Sektor in einer Ziel-Superzelle zu messen, wobei die Endgerätevorrichtung ein Signal auf einem auf Relaisschichtkanal der Ziel-Superzelle empfängt oder sendet, so dass die Basisstation gemäß der Nachricht das Aufwärtsstreckensignal auf einem dem Relaisschichtkanal entsprechenden physischen Kanal in dem zu messenden Sektor misst, ein Aufwärtsstrecken-Messergebnis des zu messenden Sektors erhält und das Aufwärtsstrecken-Messergebnis an die Basisstationssteuerung meldet; und
Beschaffen (120) des Aufwärtsstrecken-Messergebnisses des zu messenden Sektors durch die Basisstationssteuerung, wobei
die Ziel-Superzelle mindestens zwei Sektoren umfasst, die mindestens zwei Sektoren mindestens einen Relaisschichtkanal umfassen und der Relaisschichtkanal einen selbstständigen dedizierten Steuerkanal SDCCH mit einer selben Zeit-Frequenz-Ressource oder einen physischen Direktzugriffskanal PRACH mit einer selben Zeit-Frequenz-Ressource umfasst.

2. Verfahren nach Anspruch 1, wobei das Verfahren nach dem Beschaffen des Aufwärtsstrecken-Messergebnisses des zu messenden Sektors durch die Basisstationssteuerung ferner Folgendes umfasst:
Bestimmen eines Zielsektors für die Endgerätevorrichtung gemäß dem Aufwärtsstrecken-Messergebnis des zu messenden Sektors.

3. Verfahren nach Anspruch 2, wobei das Verfahren nach dem Bestimmen eines Zielsektors für die Endgerätevorrichtung ferner Folgendes umfasst:
Weiterreichen der Endgerätevorrichtung an den Zielsektor; oder
Vergeben eines Kanals an die Endgerätevorrichtung im Zielsektor und Zuweisen des Kanals an die Endgerätevorrichtung.

4. Verfahren nach einem der Ansprüche 1 bis 3, wobei das Verfahren vor dem Senden einer Nachricht durch eine Basisstationsteuerung, um eine Basisstation anzuweisen, ein Aufwärtsstreckensignal einer Endgerätevorrichtung in einem zu messenden Sektor in einer Ziel-Superzelle zu messen, ferner Folgendes umfasst:
Beschaffen von Abwärtsstrecken-Signalmessergebnissen von Superzellen, die durch die Endgerätevorrichtung gemeldet werden;
Bestimmen der Ziel-Superzelle unter den Superzellen gemäß den Abwärtsstrecken-Signalmessergebnissen der Superzellen; und
Weiterreichen der Endgerätevorrichtung an den Relaisschichtkanal.

5. Verfahren nach einem der Ansprüche 1 bis 4, wobei der Relaisschichtkanal den SDCCH umfasst und die Ziel-Superzelle eine versorgende Superzelle ist, in der sich die Endgerätevorrichtung befindet; und
das Verfahren vor dem Senden einer Nachricht durch eine Basisstationsteuerung, um eine Basisstation anzuweisen, ein Aufwärtsstreckensignal einer Endgerätevorrichtung in einem zu messenden Sektor in einer Ziel-Superzelle zu messen, ferner Folgendes umfasst:
Empfangen einer durch die Endgerätevorrichtung gesendeten Zugriffsanforderungsnachricht; und
Senden einer Sofortzuweisungsnachricht zu der Endgerätevorrichtung gemäß der Zugriffsanforderungsnachricht und Zuweisen der Endgerätevorrichtung an den SDCCH, so dass die Endgerätevorrichtung ein Signal auf dem SDCCH empfängt oder sendet.

6. Verfahren nach einem der Ansprüche 1 bis 4, wobei der Relaisschichtkanal den PRACH umfasst und die Ziel-Superzelle eine Superzelle ist, auf der die Endgerätevorrichtung campt; und
das Verfahren vor dem Senden einer Nachricht durch eine Basisstationsteuerung, um eine Basisstation anzuweisen, ein Aufwärtsstreckensignal einer Endgerätevorrichtung in einem zu messenden Sektor in einer Ziel-Superzelle zu messen, ferner Folgendes umfasst:
Empfangen einer durch die Endgerätevorrichtung auf dem PRACH gesendeten Zugriffsanforderungsnachricht.

7. Signalmessverfahren, **dadurch gekennzeichnet, dass** es Folgendes umfasst:
Empfangen (510) einer durch eine Basisstationssteuerung gesendeten Nachricht durch eine Basisstation;
Messen (520) eines Aufwärtsstreckensignals auf einem physischen Kanal, der einem Relaisschichtkanal einer Ziel-Superzelle in einem zu messenden Sektor entspricht, durch die Basisstation gemäß der Nachricht; und
Melden (530) eines Aufwärtsstrecken-Messergebnisses des durch die Basisstation gemessenen Aufwärtsstreckensignals an die Basisstationssteuerung durch die Basisstation, wobei
die Ziel-Superzelle mindestens zwei Sektoren umfasst, die mindestens zwei Sektoren mindestens einen Relaisschichtkanal umfassen und der Relaisschichtkanal einen selbstständigen dedizierten Steuerkanal SDCCH mit einer selben Zeit-Frequenz-Ressource oder einen physischen Direktzugriffskanal PRACH mit einer selben Zeit-Frequenz-Ressource umfasst.

8. Basisstationssteuerung, **dadurch gekennzeichnet, dass** sie Folgendes umfasst:
ein Nachrichtensendemodul (610), ausgelegt zum Senden einer Nachricht durch eine Basisstationsteuerung, um eine Basisstation anzuweisen, ein Aufwärtsstreckensignal einer Endgerätevorrichtung in einem zu messenden Sektor in einer Ziel-Superzelle zu messen, wobei die Endgerätevorrichtung ein Signal auf einem auf Relaisschichtkanal der Ziel-Superzelle empfängt oder sendet, so dass die Basisstation gemäß der Nachricht das Aufwärtsstreckensignal auf einem dem Relaisschichtkanal entsprechenden physischen Kanal in dem zu messenden Sektor misst, ein Aufwärtsstrecken-Messergebnis des zu messenden Sektors erhält und das Aufwärtsstrecken-Messergebnis an die Basisstationssteuerung meldet; und
ein Aufwärtsstrecken-Messergebnis-Beschaffungsmodul (620), ausgelegt zum Beschaffen des Aufwärtsstrecken-Messergebnisses des zu messenden Sektors durch Verwendung des Nachrichtensendemoduls, wobei
die Ziel-Superzelle mindestens zwei Sektoren umfasst, die mindestens zwei Sektoren mindestens einen Relaisschichtkanal umfassen und der Relaisschichtkanal einen selbstständigen dedizierten Steuerkanal SDCCH oder einen physischen Direktzugriffskanal PRACH mit einer selben Zeit-Frequenz-Ressource umfasst.

9. Vorrichtung nach Anspruch 8, ferner umfassend:
ein Zielsektor-Bestimmungsmodul, das dafür ausgelegt ist, nachdem die Basisstationssteuerung das Aufwärtsstrecken-Messergebnis des zu messenden Sektors beschafft, einen Zielsektor für die Endgerätevorrichtung gemäß dem durch das Aufwärtsstrecken-Messergebnis-Beschaffungsmodul beschafften Aufwärtsstrecken-Messergebnis des zu messenden Sektors zu bestimmen.

10. Vorrichtung nach Anspruch 9, ferner umfassend:
ein Zielsektor-Weiterreichungsmodul, das dafür ausgelegt ist, nachdem der Zielsektor für die Endgerätevorrichtung bestimmt ist, die Endgerätevorrichtung an den durch das Zielsektor-Bestimmungsmodul bestimmten Zielsektor weiterzureichen; oder
ein Zielsektor-Zuweisungsmodul, das dafür ausgelegt ist, nachdem der Zielsektor für die Endgerätevorrichtung bestimmt ist, einen Kanal an die Endgerätevorrichtung in dem durch das Zielsektor-Bestimmungsmodul bestimmten Zielsektor zu vergeben und den Kanal an die Endgerätevorrichtung zuzuweisen.

11. Vorrichtung nach einem der Ansprüche 8 bis 10, ferner umfassend:
ein erstes Relaisschichtkanal-Verarbeitungsmodul, ausgelegt zum Beschaffen von Abwärtsstrecken-Signalmessergebnissen von Superzellen, die durch die Endgerätevorrichtung gemeldet werden, bevor die Basisstationssteuerung die Nachricht sendet zum Anweisen der Basisstation zur Messung des Aufwärtsstreckensignals der Endgerätevorrichtung in dem zu messenden Sektor in der Ziel-Superzelle;
Bestimmen der Ziel-Superzelle unter den Superzellen gemäß den Abwärtsstrecken-Signalmessergebnissen der Superzellen; und
Weiterreichen der Endgerätvorrichtung an den Relaisschichtkanal.

12. Vorrichtung nach einem der Ansprüche 8 bis 11, das ferner eines zweites Relaisschichtkanal-Verarbeitungsmodul umfasst, wobei
der Relaisschichtkanal den SDCCH umfasst und die Ziel-Superzelle eine versorgende Superzelle ist, in der sich die Endgerätevorrichtung befindet; und
das zweite Relaisschichtkanal-Verarbeitungsmodul ausgelegt ist zum Empfangen einer durch die Endgerätevorrichtung gesendeten Zugriffsanforderungsnachricht, bevor die Basisstationssteuerung die Nachricht sendet zum Anweisen der Basisstation zur Messung des Aufwärtsstreckensignals der Endgerätevorrichtung in dem zu messenden Sektor in der Ziel-Superzelle, und
Senden einer Sofortzuweisungsnachricht zu der Endgerätevorrichtung gemäß der Zugriffsanforderungsnachricht und Zuweisen der Endgerätevorrichtung an den SDCCH, so dass die Endgerätevorrichtung ein Signal auf dem SDCCH empfängt oder sendet.

13. Vorrichtung nach einem der Ansprüche 8 bis 11, wobei der Relaisschichtkanal den PRACH umfasst und die Ziel-Superzelle eine Superzelle ist, auf der die Endgerätevorrichtung campt; und
ein drittes Relaisschichtkanal-Verarbeitungsmodul ausgelegt ist zum Empfangen einer durch die Endgerätevorrichtung auf dem PRACH gesendeten Zugriffsanforderungsnachricht, bevor die Basisstationssteuerung die Nachricht sendet zum Anweisen der Basisstation zur Messung des Aufwärtsstreckensignals der Endgerätevorrichtung in dem zu messenden Sektor in der Ziel-Superzelle.

14. Signalmessvorrichtung, **dadurch gekennzeichnet, dass** sie Folgendes umfasst:
ein Nachrichtenempfangsmodul (1010), ausgelegt zum Empfangen einer durch eine Basisstationssteuerung gesendeten Nachricht;
ein Aufwärtsstrecken-Signalmessmodul (1020), ausgelegt zum Messen eines Aufwärtsstreckensignals auf einem physischen Kanal, der einem Relaisschichtkanal einer Zielsuperzelle in einem zu messenden Sektor entspricht, gemäß der durch das Nachrichtenempfangsmodul empfangenen Nachricht; und
ein Aufwärtsstrecken-Messergebnis-Meldemodul (1030), ausgelegt zum Melden eines Aufwärtsstrecken-Messergebnisses des Aufwärtsstreckensignals, das durch das Aufwärtsstrecken-Signalmessmodul gemessen wird, an die Basisstationssteuerung, wobei
die Ziel-Superzelle mindestens zwei Sektoren umfasst, die mindestens zwei Sektoren mindestens einen Relaisschichtkanal umfassen und der Relaisschichtkanal einen selbstständigen dedizierten Steuerkanal SDCCH mit einer selben Zeit-Frequenz-Ressource oder einen physischen Direktzugriffskanal PRACH mit einer selben Zeit-Frequenz-Ressource umfasst.

15. Vorrichtung nach Anspruch 14, wobei die Nachricht Folgendes umfasst: Kennungsinformationen von Zeit-Frequenz-Ressourcen entsprechend dem Relaisschichtkanal und/oder Kennungsinformationen der Endgerätevorrichtung; oder Kennungsinformationen von Zeit-Frequenz-Ressourcen entsprechend dem Relaisschichtkanal und/oder Kennungsinformationen der Endgerätevorrichtung und Kennungsinformationen des zu messenden Sektors.

## Revendications

1. Procédé de mesure de signal, **caractérisé en ce qu'**il comprend :
l'envoi (110), par un contrôleur de station de base, d'un message pour donner l'instruction à une station de base de mesurer un signal de liaison montante d'un dispositif terminal dans un secteur à mesurer dans une supercellule cible, dans lequel le dispositif terminal reçoit ou envoie un signal sur un canal de couche de relais de la supercellule cible, de sorte que la station de base mesure, selon le message, le signal de liaison montante sur un canal physique correspondant au canal de couche de relais dans le secteur à mesurer, obtient un résultat de mesure de liaison montante du secteur à mesurer, et signale le résultat de mesure de liaison montante au contrôleur de station de base ; et
l'acquisition (120), par le contrôleur de station de base, du résultat de mesure de liaison montante du secteur à mesurer, dans lequel
la supercellule cible comprend au moins deux secteurs, les au moins deux secteurs comprennent au moins un canal de couche de relais, et le canal de couche de relais comprend un canal de contrôle dédié autonome, SDCCH, avec une même ressource temps-fréquence ou un canal physique d'accès aléatoire, PRACH, avec une même ressource temps-fréquence.

2. Procédé selon la revendication 1, dans lequel après l'acquisition, par le contrôleur de station de base, du résultat de mesure de liaison montante du secteur à mesurer, le procédé comprend en outre :
la détermination d'un secteur cible pour le dispositif terminal selon le résultat de mesure de liaison montante du secteur à mesurer.

3. Procédé selon la revendication 2, dans lequel après la détermination d'un secteur cible pour le dispositif terminal, le procédé comprend en outre :
le transfert du dispositif terminal au secteur cible ; ou
l'allocation d'un canal au dispositif terminal dans le secteur cible, et l'attribution du canal au dispositif terminal.

4. Procédé selon l'une quelconque des revendications 1 à 3, dans lequel avant l'envoi, par un contrôleur de station de base, d'un message pour donner l'instruction à une station de base de mesurer un signal de liaison montante d'un dispositif terminal dans un secteur à mesurer dans une supercellule cible, le procédé comprend en outre :
l'acquisition de résultats de mesure de signal de liaison descendante de supercellules signalés par le dispositif terminal ;
la détermination de la supercellule cible parmi les supercellules selon les résultats de mesure de signal de liaison descendante des supercellules ; et
le transfert du dispositif terminal au canal de couche de relais.

5. Procédé selon l'une quelconque des revendications 1 à 4, dans lequel le canal de couche de relais comprend le SDCCH, et la supercellule cible est une supercellule de desserte dans laquelle le dispositif terminal est situé ; et
avant l'envoi, par un contrôleur de station de base, d'un message pour donner l'instruction à une station de base de mesurer un signal de liaison montante d'un dispositif terminal dans un secteur à mesurer dans une supercellule cible, le procédé comprend en outre :
la réception d'un message de demande d'accès envoyé par le dispositif terminal ; et
l'envoi d'un message d'attribution immédiate au dispositif terminal selon le message de demande d'accès, et l'attribution du dispositif terminal au SDCCH, de sorte que le dispositif terminal reçoive ou envoie un signal sur le SDCCH.

6. Procédé selon l'une quelconque des revendications 1 à 4, dans lequel le canal de couche de relais comprend le PRACH, et la supercellule cible est une supercellule sur laquelle le dispositif terminal campe ; et
avant l'envoi, par un contrôleur de station de base, d'un message pour donner l'instruction à une station de base de mesurer un signal de liaison montante d'un dispositif terminal dans un secteur à mesurer dans une supercellule cible, le procédé comprend en outre :
la réception d'un message de demande d'accès envoyé par le dispositif terminal sur le PRACH.

7. Procédé de mesure de signal, **caractérisé en ce qu'**il comprend :
la réception (510), par une station de base, d'un message envoyé par un contrôleur de station de base ;
la mesure (520), par la station de base selon le message, d'un signal de liaison montante sur un canal physique correspondant à un canal de couche de relais d'une supercellule cible dans un secteur à mesurer ; et
le signalement (530), par la station de base, d'un résultat de mesure de liaison montante du signal de liaison montante mesuré par la station de base au contrôleur de station de base, dans lequel
la supercellule cible comprend au moins deux secteurs, les au moins deux secteurs comprennent au moins un canal de couche de relais, et le canal de couche de relais comprend un canal de contrôle dédié autonome, SDCCH, avec une même ressource temps-fréquence ou un canal physique d'accès aléatoire, PRACH, avec une même ressource temps-fréquence.

8. Contrôleur de station de base, **caractérisé en ce qu'**il comprend :
un module d'envoi de message (610), configuré pour envoyer, par le contrôleur de station de base, un message pour donner l'instruction à une station de base de mesurer un signal de liaison montante d'un dispositif terminal dans un secteur à mesurer dans une supercellule cible, dans lequel le dispositif terminal reçoit ou envoie un signal sur un canal de couche de relais de la supercellule cible, de sorte que la station de base mesure, selon le message, le signal de liaison montante sur un canal physique correspondant au canal de couche de relais dans le secteur à mesurer, obtienne un résultat de mesure de liaison montante du secteur à mesurer, et signale le résultat de mesure de liaison montante au contrôleur de station de base ; et
un module d'acquisition de résultat de mesure de liaison montante (620), configuré pour acquérir le résultat de mesure de liaison montante du secteur à mesurer en utilisant le module d'envoi de message, dans lequel
la supercellule cible comprend au moins deux secteurs, les au moins deux secteurs comprennent au moins un canal de couche de relais, et le canal de couche de relais comprend un canal de contrôle dédié autonome, SDCCH, ou un canal physique d'accès aléatoire, PRACH, avec une même ressource temps-fréquence.

9. Appareil selon la revendication 8, comprenant en outre :
un module de détermination de secteur cible, configuré : après que le contrôleur de station de base acquiert le résultat de mesure de liaison montante du secteur à mesurer, pour déterminer un secteur cible pour le dispositif terminal selon le résultat de mesure de liaison montante du secteur à mesurer acquis par le module d'acquisition de résultat de mesure de liaison montante.

10. Appareil selon la revendication 9, comprenant en outre :
un module de transfert de secteur cible, configuré : après que le secteur cible est déterminé pour le dispositif terminal, pour transférer le dispositif terminal au secteur cible déterminé par le module de détermination de secteur cible ; ou
un module d'attribution de secteur cible, configuré : après que le secteur cible est déterminé pour le dispositif terminal, pour allouer un canal au dispositif terminal dans le secteur cible déterminé par le module de détermination de secteur cible, et attribuer le canal au dispositif terminal.

11. Appareil selon l'une quelconque des revendications 8 à 10, comprenant en outre :
un premier module de traitement de canal de couche de relais, configuré : avant que le contrôleur de station de base envoie le message pour donner l'instruction à la station de base de mesurer le signal de liaison montante du dispositif terminal dans le secteur à mesurer dans la supercellule cible, pour acquérir des résultats de mesure de signal de liaison descendante de supercellules signalés par le dispositif terminal ;
déterminer la supercellule cible parmi les supercellules selon les résultats de mesure de signal de liaison descendante des supercellules ; et
transférer le dispositif terminal au canal de couche de relais.

12. Appareil selon l'une quelconque des revendications 8 à 11, comprenant en outre un deuxième module de traitement de canal de couche de relais, dans lequel :
le canal de couche de relais comprend le SDCCH, et la supercellule cible est une supercellule de desserte dans laquelle le dispositif terminal est situé ; et
le deuxième module de traitement de canal de couche de relais est configuré : avant que le contrôleur de station de base envoie le message pour donner l'instruction à la station de base de mesurer le signal de liaison montante du dispositif terminal dans le secteur à mesurer dans la supercellule cible, pour recevoir un message de demande d'accès envoyé par le dispositif terminal, et
envoyer un message d'attribution immédiate au dispositif terminal selon le message de demande d'accès, et attribuer le dispositif terminal au SDCCH, de sorte que le dispositif terminal reçoive ou envoie un signal sur le SDCCH.

13. Appareil selon l'une quelconque des revendications 8 à 11, dans lequel le canal de couche de relais comprend le PRACH, et la supercellule cible est une supercellule sur laquelle le dispositif terminal campe ; et
un troisième module de traitement de canal de couche de relais est configuré pour : avant que le contrôleur de station de base envoie le message pour donner l'instruction à la station de base de mesurer le signal de liaison montante du dispositif terminal dans le secteur à mesurer dans la supercellule cible, pour recevoir un message de demande d'accès envoyé par le dispositif terminal sur le PRACH.

14. Appareil de mesure de signal, **caractérisé en ce qu'**il comprend :
un module de réception de message (1010), configuré pour recevoir un message envoyé par un contrôleur de station de base ;
un module de mesure de signal de liaison montante (1020), configuré pour mesurer, selon le message reçu par le module de réception de message, un signal de liaison montante sur un canal physique correspondant à un canal de couche de relais d'une supercellule cible dans un secteur à mesurer ; et
un module de signalement de résultat de mesure de liaison montante (1030), configuré pour signaler un résultat de mesure de liaison montante du signal de liaison montante mesuré par le module de mesure de signal de liaison montante au contrôleur de station de base, dans lequel
la supercellule cible comprend au moins deux secteurs, les au moins deux secteurs comprennent au moins un canal de couche de relais, et le canal de couche de relais comprend un canal de contrôle dédié autonome, SDCCH, avec une même ressource temps-fréquence ou un canal physique d'accès aléatoire, PRACH, avec une même ressource temps-fréquence.

15. Appareil selon la revendication 14, dans lequel le message comprend : des informations d'identifiant de ressources temps-fréquence correspondant au canal de couche de relais et/ou des informations d'identifiant du dispositif terminal ; ou
des informations d'identifiant de ressources temps-fréquence correspondant au canal de couche de relais et/ou des informations d'identifiant du dispositif terminal, et des informations d'identifiant du secteur à mesurer.
